# DEMANDE DE BREVET EUROPEEN

(11) **EP 0 703 061 A1**
(43) Date de publication de la demande: **27.03.1996**
(21) Numéro de dépôt: 95202429.7
(22) Date de dépôt: 07.09.1995
(51) Int. Cl.: B29C 63/10, B29C 53/60, B29D 23/00

(54) **Procédé et dispositif de fabrication d'un article composite renforcé**

(30) Priorité: 15.09.1994 BE 9400830; 23.12.1994 BE 9401158
(71) Demandeur: SOLVAY & Cie (Société Anonyme), B-1050 Bruxelles (BE)
(72) Inventeur: Delimoy, Didier, B-1302 Dion-Valmont (BE); De Bruille, Thierry, B-1330 Rixensart (BE)
(74) Mandataire: Dufrasne, Eugène

(57) **Abrégé**

Procédé de fabrication d'un article composite comprenant un corps plein renforcé par enroulement d'au moins une bande de renforcement (66',66'') autour du corps plein (18). La bande de renforcement déposée sur le corps plein est soumise à une force de traction constante. En aval de l'endroit où cette bande de renforcement entre en contact avec le corps plein (18), elle est consolidée par une pression locale. L'invention concerne également un dispositif pour la fabrication de tels articles composites renforcés.

## Description

La présente invention a pour objet un procédé et un dispositif de fabrication d'un article composite renforcé.

Dans de nombreux domaines industriels, il est fait usage d'articles composites constitués d'un corps plein à base de matière plastique renforcé au moyen de fibres de renforcement telles que des libres de verre. Ces fibres de renforcement pouvent notamment être mises en oeuvre sous la forme de faisceaux de fibres continues imprégnés d'une matière thermoplastique. Il est ainsi possible de fabriquer, par exemple, des barres, tiges, longerons, poutrelles, profilés, etc. renforcés par des faisceaux de fibres continues enroulés à leur surface, ces articles présentant un faible poids et une résistance mécanique élevée.

Actuellement ces articles composites renforcés à base de matière plastique sont fabriqués en extrudant d'abord un corps plein en matière plastique. Ce corps plein est ensuite calibré, puis éventuellement réchauffé pour ramollir sa couche superficielle extérieure. Une ou plusieurs bandes de renforcement, comprenant généralement des fibres de renforcement, par exemple des fibres de verre, imprégnées par une matière thermoplastique, sont alors enroulées autour du corps plein. Cet enroulement se fait par exemple au moyen d'un dispositif d'enroulement des bandes de renforcement en rotation autour du corps plein, pendant que ce dernier défile axialement à travers ce dispositif d'enroulement. La vitesse de rotation de ce dispositif est réglée en fonction de la vitesse de défilement du corps plein, de façon à déterminer le pas de l'enroulement.

Un premier procédé pour assurer une pression de contact suffisante de la ou des bandes de renforcement sur le corps plein consiste à exercer, lors de l'enroulement de la bande de renforcement, une force de traction importante sur cette bande. Cette force de traction doit notamment créer entre la bande de renforcement et le corps plein une pression adéquate. Des équipements de contrôle peuvent réguler la force de traction exercée sur la bande de renforcement, mais la pression de contact effective est cependant difficilement quantifiable, car elle dépend non seulement de la force de traction exercée sur la bande de renforcement, mais aussi des conditions de contact, notamment des déformations de la couche superficielle du corps plein et/ou de la bande de renforcement sous l'effet de la force de traction. Si la force de traction requise pour assurer une bonne adhérence de la bande de renforcement enroulée est trop importante, elle engendre des déformations importantes de la bande de renforcement, par exemple un regroupement des libres comprises dans la bande de renforcement vers le centre de celle-ci et un fluage de la matière plastique qui l'imprègne vers sa périphérie. Dans des cas extrêmes, l'article peut se déformer et/ou la bande de renforcement peut pénétrer profondément dans le corps plein. De plus, l'état de surface des articles obtenus par ce procédé est souvent médiocre, ce qui rend notamment le dépôt éventuel d'une couche de finition difficile.

Un autre procédé pour assurer une pression de contact suffisante entre la bande de renforcement et le corps plein consiste à appliquer, au niveau de la zone de premier contact entre la bande de renforcement et le corps plein, une pression locale sur la bande de renforcement. On dispose à cette fin un patin de compression refroidi à l'endroit même du premier contact entre la bande de renforcement et le corps plein. La pression de contact, qui est ainsi largement indépendante de la force de traction exercée sur la bande de renforcement, devient plus facilement contrôlable. Son application est par conséquent plus homogène et l'état de surface de l'article est amélioré. Cependant, le patin de compression doit être maintenu à une température suffisamment faible pour éviter que de la matière plastique n'y adhère. Dans ce procédé, il est donc très important de maintenir la température de la surface de contact du patin en dessous d'une valeur critique. Cette température critique dépend entre autres de la nature de la matière plastique qui constitue, recouvre ou imprègne la bande de renforcement. Elle se situe en général en dessous de la température ambiante. Il en résulte que la bande de renforcement, qui a par ailleurs une inertie thermique très faible, est immédiatement refroidie au contact du patin de pression. Il est par conséquent impossible d'avoir une température optimale de la bande de renforcement - c'est-à-dire une viscosité optimale de la matière plastique qui l'imprègne - à l'endroit de son application sur la surface ramollie du corps plein. En conclusion, ce procédé ne permet guère d'obtenir des conditions qui favorisent une bonne adhérence entre la bande de renforcement et le corps plein.

Le but de la présente invention est dès lors de fournir un procédé et un dispositif de fabrication d'articles renforcés à base de matière plastique, qui permettent de mieux contrôler les conditions d'application d'une ou plusieurs bandes de renforcement sur un corps plein.

Ce but est atteint par un procédé de fabrication d'un article composite comprenant un corps plein renforcé, selon lequel au moins une bande de renforcement est enroulée autour du corps plein dudit article, à base d'une matière plastique A, qui se caractérise en ce qu'une pression de consolidation est exercée localement sur la bande de renforcement, à un ou plusieurs endroits situés en aval du point où elle entre en contact avec le corps plein.

Dans la description détaillée de l'invention qui suit, on ne se référera par commodité qu'à une seule bande de renforcement, bien que, comme exposé ci-dessus, l'invention concerne de manière équivalente les variantes dans lesquelles plusieurs bandes de renforcement sont enroulées autour du corps plein, lesdites bandes pouvant être agencées de façon à former une ou plusieurs couches.

Par corps plein, on entend désigner tout type de pièce massive, fabriquée par injection, par extrusion ou par tout autre procédé. A titre d'exemple de corps plein, on peut notamment citer les barres, profilés, etc.

L'enroulement autour du corps plein peut être réalisé de toute manière connue. Souvent, ledit enroulement est hélicoïdal.

Avec le procédé selon l'invention, il est possible d'optimiser indépendamment l'une de l'autre la pression de contact initial de la bande de renforcement sur le corps plein et la pression de consolidation de cette bande déjà en contact avec le corps plein. La pression de contact initial est déterminée par la force de traction exercée sur la bande de renforcement lors de son enroulement. Cette force de traction peut être modérée, de façon à obtenir un positionnement précis de la bande de renforcement, à ne pas altérer sa structure et à éviter toute déformation du corps plein. En effet, dans le procédé selon l'invention, cette force de traction n'est pas indispensable en vue d'assurer une bonne adhérence de la bande de renforcement au corps plein.

Dans la zone de premier contact entre la surface du corps plein et la bande de renforcement, les températures peuvent être maintenues à des valeurs idéales, auxquelles la matière plastique que comprend la surface du corps plein et, le cas échéant, celle constituant, enrobant ou imprégnant la bande de renforcement, sont à l'état visqueux ou ramolli, dans lequel elles présentent une viscosité suffisamment faible pour assurer une adhérence optimale. Ces conditions idéales ne sont en effet perturbées ni par un refroidissement, ni par une pression de contact excessive dans la zone d'application. En particulier, on préfère que la surface du corps plein soit chauffée, de manière à ce qu'elle soit ramollie à l'endroit où la bande de renforcement entre en contact avec le corps plein. Entre l'endroit où la bande de renforcement entre en contact avec la surface ramollie du corps plein et l'endroit où la pression de consolidation est appliquée, il est dès lors possible de maintenir des conditions de pression et de température qui sont optimales pour assurer une excellente application de la bande de renforcement sur la couche superficielle ainsi ramollie du corps plein.

Pour favoriser l'adhérence entre la bande de renforcement et le corps plein, on peut également utiliser une bande de renforcement ou un corps plein dont au moins une face est revêtue d'une matière adhésive. Alternativement et de manière avantageuse, on peut encore utiliser une bande de renforcement constituée, enrobée ou imprégnée d'une matière thermoplastique, que l'on réchauffe avant d'être apposée sur le corps plein. Dans ce cas, on préfère qu'à l'endroit de la consolidation, la matière thermoplastique qui constitue, enrobe ou imprègne la bande de renforcement se trouve à une température comprise entre T_{f} + 10 °C et T_{f} + 100 °C dans le cas de polymères semi-cristallins (T_{f} désignant leur température de fusion), ou à une température comprise entre Tᵥ + 20 °C et Tᵥ + 150 °C dans le cas de polymères amorphes (Tᵥ désignant leur température de transition vitreuse). La couche superficielle peut aussi être formée par une bande de renforcement préalablement déposée sur le corps plein. La consolidation par une pression locale garantit alors que les différentes couches de bandes de renforcement sont compactées et que l'aspect extérieur de l'article est amélioré. Des inclusions d'air entre le corps plein et la ou les couches de bandes de renforcement sont notamment éliminées.

La consolidation par compression radiale de la bande de renforcement et de la couche superficielle du corps plein se fait en aval de l'endroit où la bande de renforcement est déposée sur le corps plein. Il s'ensuit qu'à l'endroit où cette compression a lieu, l'application de la bande de renforcement sur la couche superficielle du corps plein est déjà terminée, et que la consolidation ultérieure ne peut plus avoir d'effets néfastes sur la précision de l'application ni sur la structure interne de la bande de renforcement. La pression de consolidation peut notamment être augmentée sans pour autant affecter la pression de contact initial, qui est déterminée exclusivement par la traction exercée sur la bande de renforcement.

Lorsque l'enroulement est hélicoïdal, la distance axiale séparant l'endroit où la bande de renforcement est déposée sur le corps plein de celui où la pression de consolidation est exercée est de préférence au moins égale au pas de l'enroulement. De manière particulièrement préférée, elle est de l'ordre de grandeur des dimensions transversales moyennes du corps plein.

Selon un mode d'exécution préféré, la bande de renforcement est soumise à une force de traction constante lors de son enroulement sur le corps plein. On évite ainsi d'exercer soit une trop forte traction, soit une trop faible traction sur la bande de renforcement. Une trop forte tension peut en effet engendrer des déformations de la bande de renforcement et/ou du corps plein, produisant les effets néfastes mentionnés plus haut. Une trop faible tension ne produit pas une application optimale de la bande de renforcement sur le corps plein.

Il sera noté que la bande de renforcement est avantageusement refroidie à l'endroit où elle est soumise à la pression locale de consolidation, afin notamment d'obtenir un meilleur aspect de la surface extérieure de l'article.

De préférence, la bande de renforcement comprend au moins un faisceau de fibres de renforcement unprégnées d'une matière plastique B.

Avantageusement, afin d'obtenir une surface extérieure plus uniforme, une couche de finition à base d'une matière plastique C est appliquée sur le corps plein revêtu de la bande de renforcement, en aval de l'endroit où la pression locale de consolidation est exercée. De cette manière il est possible de produire soit des articles avec une surface parfaitement lisse, soit des articles comprenant une surface ayant une texture bien déterminée. L'ajout d'une couche externe à base d'une matière plastique C peut se faire par exemple par un procédé d'extrusion-couchage. Souvent, l'épaisseur d'une telle couche de finition est faible.

D'autres couches peuvent encore être appliquées autour du corps plein avant la couche de finition, par exemple une couche d'imperméabilisation constituée d'une mince feuille métallique enroulée autour du corps plein revêtu de la bande de renforcement.

Selon un autre mode de réalisation, la pression locale de consolidation est exercée sur la bande à plusieurs endroits espacés angulairement autour du corps plein. La consolidation est ainsi répartie sur plusieurs endroits différents, et la pression radiale de consolidation exercée à chacun des endroits en question peut être plus faible.

La présente invention fournit aussi un dispositif pour la fabrication d'un article composite comprenant un corps plein renforcé, comprenant au moins un dispositif d'enroulement d'au moins une bande de renforcement autour du corps plein de l'article, à base d'une matière plastique A, ainsi qu'au moins un dispositif de consolidation exerçant localement une pression sur la bande de renforcement, qui se caractérise en ce que ledit dispositif de consolidation est agencé de façon à exercer ladite pression en aval de l'endroit où la bande de renforcement entre en contact avec le corps plein.

Selon un premier mode d'exécution préféré, le dispositif de consolidation comprend au moins un organe de compression et des moyens de déplacement permettant de déplacer celui-ci d'une position à l'écart du corps plein à une position dans laquelle il exerce une pression locale prédéterminée sur la bande de renforcement en contact avec le corps plein.

De préférence, l'organe de compression comprend un circuit de refroidissement de sa surface de contact destinée à être pressée contre la bande de renforcement. On évite ainsi que de la matière plastique n'adhère au dispositif de consolidation.

Avantageusement, l'organe de compression comprend un rouleau fou. Ce rouleau fou est déplacé contre la bande de renforcement appliquée sur le corps plein, en rotation autour de son axe longitudinal. Alternativement, l'organe de compression peut comprendre un patin.

Selon un autre mode de réalisation, le dispositif de consolidation est entraîné par des moyens lui imposant une rotation relative par rapport au corps plein.

Alternativement, plusieurs dispositifs de consolidation sont agencés autour du corps plein, de façon à exercer une pression de consolidation à des endroits régulièrement espacés. Dans ce cas, les dispositifs de consolidation sont avantageusement entraînés par des moyens leur imposant un mouvement de va-et-vient rotatif d'une amplitude angulaire au moins égale à 360°/n, n désignant le nombre de dispositifs de consolidation. De préférence, cette amplitude angulaire est au moins égale à 360°/n + 20°. On préfère que les différents dispositifs de consolidation soient contenus dans un même plan perpendiculaire à l'axe du corps plein.

Selon une variante de réalisation commode, les dispositifs de consolidation sont supportés par un plateau rotatif mû par un moteur par l'intermédiaire d'un mécanisme bielle/manivelle, de manière à leur impartir le mouvement de va-et-vient rotatif.

Les matières plastiques A, B et C mentionnées ci-dessus peuvent être essentiellement constituées d'un ou plusieurs polymères quelconques. Avantageusement, elles sont thermoplastiques.

Par thermoplastiques, on entend par exemple désigner les polyoléfines, notamment le polyéthylène et le polypropylène; les polymères du chlorure de vinyle, tels que PVC; les polymères du fluorure de vinylidène, tels que le poly(fluorure de vinylidène) et les copolymères du fluorure de vinylidène et du chlorotrifluoroéthylène, etc.; ou encore tout mélange de tels polymères thermoplastiques.

A ces matières plastiques peuvent être ajoutés un ou plusieurs additifs classiques tels que pigments, anti-oxydants, adjuvants de mise en oeuvre, matières de charge, etc.

La bande de renforcement peut avantageusement comprendre un ou plusieurs faisceaux de fibres de renforcement, telles que des fibres de carbone, de verre ou d'aramide. On préfère utiliser des fibres de verre. Ces fibres ont en général un diamètre de 7 à 100 µm, et une longueur élevée, par exemple de l'ordre de plusieurs centaines de mètres.

Pour renforcer un corps plein à base de matière plastique, la bande de renforcement peut avantageusement se présenter sous la forme d'un COFIT, c'est-à-dire sous la forme d'un faisceau de fibres continues imprégnées par une matière thermoplastique (Continuous Fibers Impregnated by a Thermoplastic), sous la forme de fibres co-mêlées, c'est-à-dire sous la forme d'un faisceau de fibres de renforcement et de fibres de matière thermoplastique mélangées, ou encore sous la forme d'un faisceau de fibres entre lesquelles on a dispersé une matière thermoplastique en poudre. Il est évident que lors de l'utilisation d'une telle bande de renforcement, celle-ci doit être chauffée avant sa mise en oeuvre afin que les fibres soient correctement imprégnées par la matière thermoplastique B.

Afin notamment d'assurer une bonne adhérence entre le corps plein et la bande de renforcement, et donc une bonne reprise des efforts circonférentiels par cette dernière, la matière plastique B utilisée pour l'imprégnation de la bande de renforcement est de préférence compatible avec la matière plastique A ou d'une nature chimique semblable. A titre de paires de matières plastiques de nature chimique semblable, on peut par exemple utiliser deux polymères de l'éthylène, ou deux polymères du chlorure de vinyle. Leur compatibilité est ainsi assurée. Ces deux matières plastiques peuvent encore être rendues compatibles par l'utilisation d'un ou plusieurs agents compatibilisants adéquats mélangés à au moins l'une d'entre elles.

Lorsqu'une couche de finition est présente, une bonne adhérence est souhaitable entre celle-ci et la "couche" que constitue(nt) la ou les bandes de renforcement à la surface du corps plein, afin d'éviter tout risque de délamination de la couche de finition. En outre, la couche de finition peut ainsi participer, même faiblement, à la reprise des efforts. Afin d'améliorer cette adhérence, la matière plastique C est avantageusement compatible avec la matière plastique B ou d'une nature chimique semblable. Ces deux matières plastiques peuvent encore être rendues compatibles par l'utilisation d'un ou plusieurs agents compatibilisants mélangés à au moins l'une d'entre elles. On peut également leur interposer une couche d'adhésif.

En vue d'obtenir des propriétés mécaniques élevées et homogènes de l'article renforcé et de faciliter un éventuel recyclage ultérieur de celui-ci, les matières plastiques mises en oeuvre sont de préférence compatibles, ou d'une nature chimique semblable.

On préfère plus particulièrement que les matières plastiques mises en oeuvre soient essentiellement constituées de polyéthylène de haute densité.

D'autres avantages et particularités de l'invention ressortiront de manière non limitative de la description détaillée des modes de réalisation décrits, à titre d'exemple, sur base des figures annexées, dans lesquelles :
- la Figure 1 représente une coupe longitudinale d'un dispositif de fabrication d'articles composites renforcés selon l'invention;
- la Figure 2 représente une coupe transversale à travers ce dispositif selon AA';
- la Figure 3 représente schématiquement un dispositif d'enroulement de la bande de renforcement; et
- la Figure 4 est une coupe transversale à travers une variante d'exécution du dispositif selon l'invention.

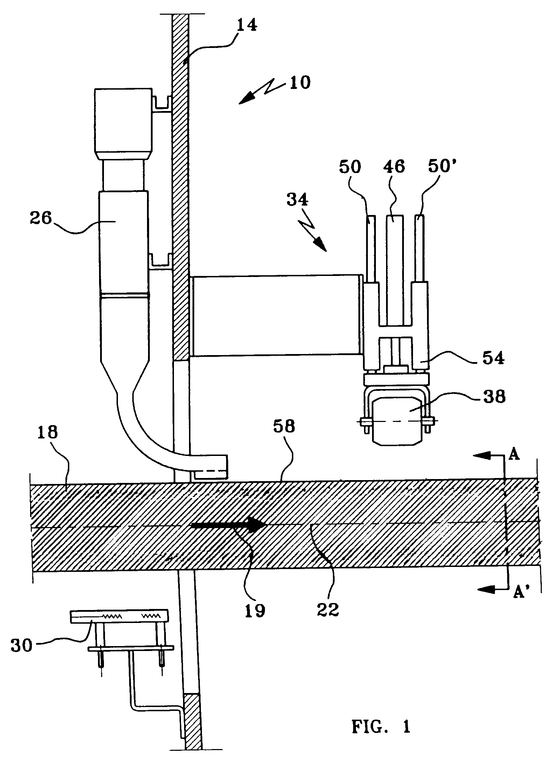

Dans la Figure 1,la référence 10 identifie globalement un dispositif utilisé lors de la fabrication d'articles composites renforcés, permettant d'enrouler hélicoïdalement une bande de renforcement autour d'un corps plein 18. Ce dispositif 10 comprend un plateau annulaire rotatif 14 tournant autour d'un corps plein 18. Celui-ci se déplace le long de son axe longitudinal 22 à travers l'orifice central du plateau rotatif 14, dans la direction et le sens indiqués par la flèche 19. Le plateau rotatif 14 supporte quatre dispositifs d'enroulement et de préchauffage de la bande de renforcement à enrouler autour du corps plein 18. Ces dispositifs d'enroulement ne sont cependant pas représentés sur cette Figure 1, afin de ne pas la surcharger. Il sera noté que la conjonction du mouvement de rotation du plateau et du mouvement de translation du corps plein 18 produit un enroulement hélicoïdal de la bande de renforcement autour du corps plein 18.

Le plateau rotatif 14 supporte encore un dispositif de préchauffage à air chaud du corps plein 18 (canon d'air chaud 26), ainsi qu'un dispositif de préchauffage 30 à rayons infrarouges. En fonction de l'application et des polymères utilisés, on préfère utiliser soit le canon à air chaud 26, soit le dispositif de chauffage par rayons infrarouges 30, soit encore les deux dispositifs 26 et 30 conjointement, pour ramollir la couche superficielle du corps plein 18.

Le plateau 14 supporte également 4 dispositifs de consolidation de la bande de renforcement enroulée autour du corps plein; seul l'un d'entre eux, repéré globalement par la référence 34, a cependant été représenté, pour des raisons de clarté. Sur la Figure 1, ce dispositif de consolidation est plus précisément représenté dans une position de repos, à l'écart du corps plein 18. Le dispositif de consolidation 34 comprend comme organe de compression un rouleau fou 38, comportant un circuit interne de refroidissement raccordé à un groupe frigorifique extérieur (non représenté). Un vérin pneumatique 46 permet de déplacer ce rouleau fou 38 de sa position de repos en direction du corps plein 18 et de l'appliquer radialement contre ce dernier. La pression locale de consolidation, exercée par le rouleau fou sur la bande de renforcement enroulée autour du corps plein 18, peut être ajustée en réglant la pression d'alimentation du vérin 46. Deux tiges de guidages 50, 50', solidaires du rouleau fou 38, sont guidées dans des coulisses 54 fixées rigidement au plateau 14. Il s'ensuit que le dispositif de consolidation 34 est entrainé en rotation par le plateau 14; c'est-à-dire qu'il est en rotation relative par rapport au corps plein 18.

Il importe de noter que la bande de renforcement est appliquée en un endroit, repéré sur la Figure 1 par la flèche 58, qui est situé en aval des dispositifs de chauffage 26 et 30, et en amont du dispositif de consolidation 34 (le sens de défilement du corps plein 18 est indiqué par la flèche 19). En d'autres termes, le dispositif de consolidation 34 permet d'appliquer une pression de consolidation radiale sur la bande de renforcement enroulée autour du corps plein à une certaine distance axiale en aval de l'endroit d'application 58 de cette bande de renforcement. Cette distance est optimisée de sorte que l'application de la bande de renforcement à la surface du corps plein 18 soit terminée avant la consolidation, et ne soit donc pas perturbée par celle-ci.

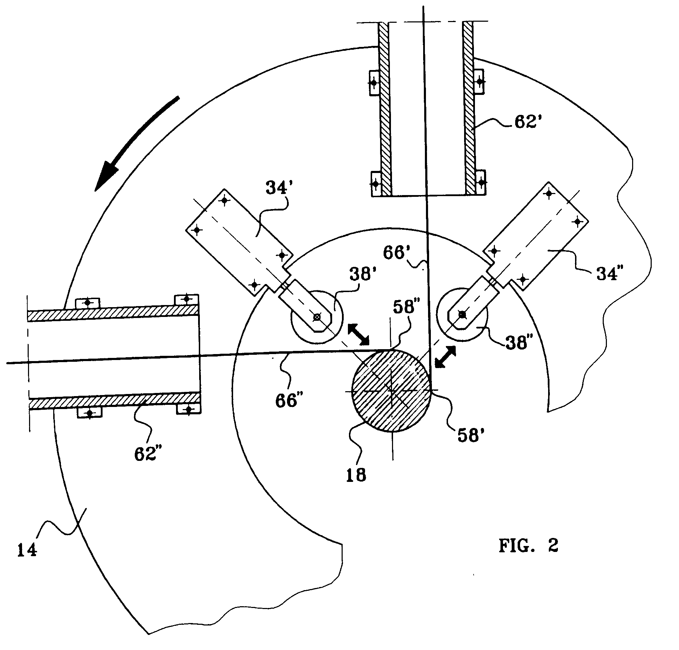

La Figure 2 montre une coupe à travers le dispositif de la Figure 1 au niveau du dispositif de consolidation 34, selon l'axe AA'. Sur cette Figure, on voit les canaux de sortie 62', 62'' de deux des quatre dispositifs d'enroulement. De ces canaux de sortie 62', 62'' sortent des bandes de renforcement 66' et 66'' à enrouler hélicoïdalement autour du corps plein 18. Il est bien entendu envisageable d'ajouter des dispositifs d'enroulement supplémentaires sur le plateau 14, si l'on veut déposer plus de quatre bandes de renforcement sur le corps plein 18. Sur la Figure 2, 58' et 58'' marquent les endroits où les deux bandes de renforcement 66' et 66'' sont déposées sur le corps plein 18. A chaque canal de sortie 62', 62'' de la bande de renforcement est associé un dispositif de consolidation 34', respectivement 34''. Ces dispositifs de consolidation sont disposés en aval des dispositifs d'enroulement, c'est-à-dire qu'ils sont plus éloignés du plateau 14 que ceux-ci.

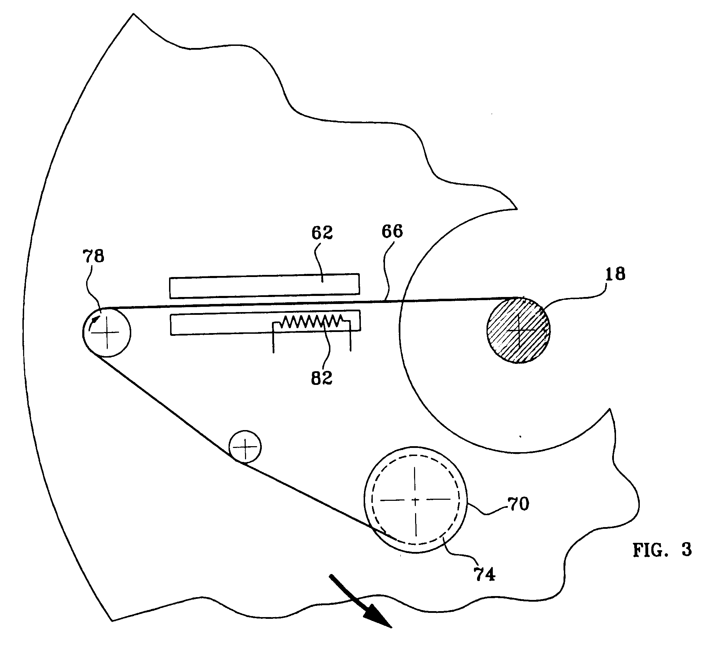

La Figure 3 illustre plus en détail un dispositif d'enroulement d'une bande de renforcement. Cette dernière est enroulée sur une bobine 70 qui est montée sur un cylindre de support 74. Ce cylindre 74 est équipé d'un frein, par exemple du type magnétique à poudre, qui est apte à produire un couple de freinage réglable. La force de traction exercée sur la bande de renforcement 66 s'enroulant sur le corps plein 18 est directement proportionnelle à ce couple de freinage. Cette force de traction est mesurée en continu au moyen d'un dynamomètre associé à un palier de mesure 78. La valeur mesurée de cette force est comparée en continu à une valeur de consigne. En cas de dépassement de cette valeur de consigne, vers le haut ou vers le bas, l'action du frein sur le cylindre 74 est ajustée en conséquence, de façon à maintenir la tension sur la bande de renforcement quasi constante, égale à une valeur prédéterminée. Du palier de mesure 78, la bande de renforcement 66 traverse le canal de sortie 62 dans lequel elle est préchauffée par exposition à un dispositif à rayons infrarouges 82, qui la réchauffe à une température prédéterminée, avant qu'elle ne soit déposée sur le corps plein 18.

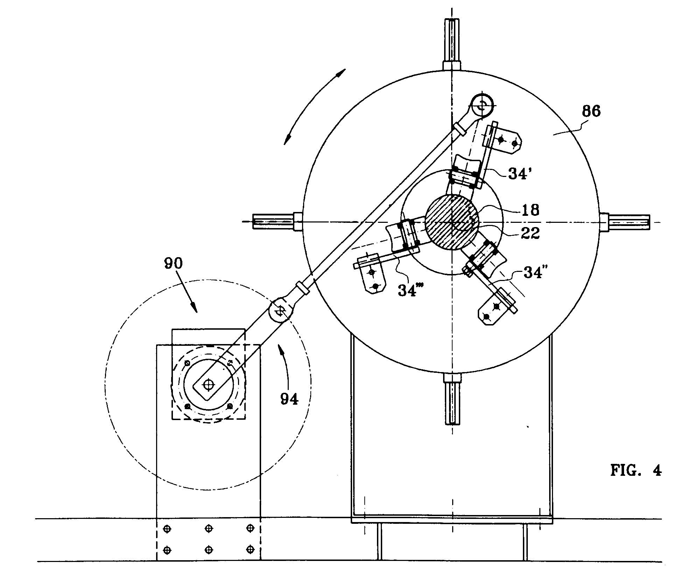

La Figure 4 montre une variante d'exécution d'un dispositif de consolidation. Trois dispositifs de consolidation 34', 34'' et 34''', du type décrit plus haut, sont supportés par un plateau 86 et espacés angulairement l'un de l'autre de 120°. Ce plateau 86 est rotatif indépendamment du premier plateau 14 décrit plus haut, qui n'est plus représenté sur cette Figure 4. Il est situé axialement en aval de l'endroit où la bande de renforcement est déposée sur le corps plein 18. Un moteur 90 auquel est associé un mécanisme bielle/manivelle 94 entraîne ce plateau 86 dans un mouvement oscillatoire autour de l'axe 22 du corps plein 18. Les organes de consolidation 34', 34'', 34''' décrivent par conséquent un mouvement oscillatoire ou de va-et-vient rotatif (c'est-à-dire alternativement dans le sens horlogique et puis dans le sens anti-horlogique) autour de l'axe 22 du corps plein 18. L'amplitude de ce mouvement oscillatoire est d'environ 150°. Il sera noté que le fait d'avoir trois dispositifs de consolidation séparés permet de réduire la pression radiale exercée par chacun d'eux. La consolidation se fait donc d'une manière plus homogène. La faible amplitude du mouvement oscillatoire permet par ailleurs une alimentation plus aisée des rouleaux de consolidation (38', 38'') par un liquide de refroidissement, par l'intermédiaire de simples tuyaux flexibles et sans utiliser de joints tournants ailleurs qu'au niveau de l'axe de ces rouleaux. Ces rouleaux refroidis sont alors des rouleaux creux munis de raccords tournants pour les flexibles d'alimentation au niveau de leurs axes.

## Revendications

1. Procédé de fabrication d'un article composite comprenant un corps plein renforcé selon lequel au moins une bande de renforcement est enroulée autour du corps plein dudit article, à base d'une matière plastique A, caractérisé en ce qu'une pression de consolidation est exercée localement sur la bande de renforcement, à un ou plusieurs endroits situés en aval du point où elle entre en contact avec le corps plein.

2. Procédé de fabrication selon la revendication 1, dans lequel la surface du corps plein est chauffée de manière à ce qu'elle soit ramollie à l'endroit où la bande de renforcement entre en contact avec le corps plein.

3. Procédé de fabrication selon l'une quelconque des revendications précédentes, dans lequel la bande de renforcement est soumise à une force de traction constante lors de son enroulement sur le corps plein.

4. Procédé de fabrication selon l'une quelconque des revendications précédentes, dans lequel la bande de renforcement est refroidie à l'endroit où elle est soumise à la pression locale de consolidation.

5. Procédé de fabrication selon l'une quelconque des revendications précédentes, dans lequel la bande de renforcement comprend au moins un faisceau de fibres de renforcement imprégnées d'une matière plastique B.

6. Procédé de fabrication selon l'une quelconque des revendications précédentes, dans lequel une couche de finition à base d'une matière plastique C est appliquée sur le corps plein revêtu de la bande de renforcement, en aval de l'endroit où la pression locale de consolidation est exercée.

7. Procédé de fabrication selon l'une quelconque des revendications précédentes, dans lequel la pression locale de consolidation est exercée sur la bande à plusieurs endroits espacés angulairement autour du corps plein.

8. Dispositif pour la fabrication d'un article composite comprenant un corps plein renforcé, comprenant au moins un dispositif (10) d'enroulement d'au moins une bande de renforcement (66) autour du corps plein de l'article (18), à base d'une matière plastique A, ainsi qu'au moins un dispositif de consolidation (34) exerçant localement une pression sur la bande de renforcement, caractérisé en ce que ledit dispositif de consolidation est agencé de façon à exercer ladite pression en aval de l'endroit (58) où la bande de renforcement entre en contact avec le corps plein.

9. Dispositif de fabrication selon la revendication 8, dans lequel le dispositif de consolidation (34) comprend au moins un organe de compression (38) et des moyens de déplacement (46) permettant de déplacer celui-ci d'une position à l'écart du corps plein (18) à une position dans laquelle il exerce une pression locale prédéterminée sur la bande de renforcement (66) en contact avec le corps plein.

10. Dispositif de fabrication selon la revendication 9, dans lequel l'organe de compression (38) comprend un circuit de refroidissement de sa surface de contact destinée à être pressée contre la bande de renforcement (66).

11. Dispositif de fabrication selon l'une quelconque des revendications 9 ou 10, dans lequel l'organe de compression comprend un rouleau fou.

12. Dispositif de fabrication selon l'une quelconque des revendications 9 ou 10, dans lequel l'organe de compression comprend un patin.

13. Dispositif de fabrication selon l'une quelconque des revendications 8 à 12, dans lequel le dispositif de consolidation (34) est entrainé par des moyens lui imposant une rotation relative par rapport au corps plein (18).

14. Dispositif de fabrication selon l'une quelconque des revendications 8 à 13, dans lequel plusieurs dispositifs de consolidation (34', 34'') sont agencés autour du corps plein (18).

15. Dispositif de fabrication selon la revendication 14, dans lequel les dispositifs de consolidation (34', 34'') sont entraînés par des moyens leur imposant un mouvement de va-et-vient rotatif d'une amplitude angulaire au moins égale à 360°/n, n désignant le nombre de dispositifs de consolidation.

16. Dispositif de fabrication selon la revendication 15, dans lequel les dispositifs de consolidation (34', 34'') sont supportés par un plateau rotatif (86) mû par un moteur (90) par l'intermédiaire d'un mécanisme bielle/manivelle (94).
